Europäisches Patentamt

European Patent Office

Office européen des brevets

(19)

(11) Numéro de publication: **0 085 269**
**B1**

## (12) FASCICULE DE BREVET EUROPEEN

(45) Date de publication du fascicule du brevet:
**14.05.86**

(51) Int. Cl.⁴: **G 09 B 15/00**

(21) Numéro de dépôt: **82420181.8**

(22) Date de dépôt: **17.12.82**

(54) Dispositif pédagogique pour l'éducation musicale de l'oreille.

(30) Priorité: **31.12.81 FR 8124666**

(43) Date de publication de la demande:
**10.08.83 Bulletin 83/32**

(45) Mention de la délivrance du brevet:
**14.05.86 Bulletin 86/20**

(84) Etats contractants désignés:
**BE CH DE GB IT LI LU NL SE**

(56) Documents cités:
**EP - A - 0 015 040**
**GB - A - 1 465 470**
**US - A - 4 012 979**
**US - A - 4 321 853**

**Le dossier contient des informations techniques présentées postérieurement au dépôt de la demande et ne figurant pas dans le présent fascicule.**

(73) Titulaire: **EUTERMATIQUE, rue des Mûriers, F-69540 Irigny, Rhône (FR)**

(72) Inventeur: **Nogier, Jean, 138 avenue Thiers, Lyon 6ème Rhône (FR)**

(74) Mandataire: **Maureau, Pierre, Cabinet GERMAIN & MAUREAU Le Britannia - Tour C 20, Boulevard E. Déruelle, F-69003 Lyon (FR)**

ACTORUM AG

# Description

La présente invention a pour objet un dispositif pédagogique permettant l'éducation musicale de l'oreille sous la forme de dictées musicales et rhythmiques, avec analyse automatique des réponses de l'élève et, éventuellement, modification du déroulement de l'exercice en cours en fonction de ses réponses.

De même qu'il existe de façon générale des «machines à enseigner», des dispositifs spécialement destinés à l'éducation musicale ont été déjà proposés. Toutefois, malgré les progrès récents de la micro-électronique, les appareils de ce genre actuellement connus ont encore des possibilités très peu nombreuses, qui se limitent pratiquement à la répétition par l'élève, sur un clavier de type piano, d'une note ou d'une série de notes générée précédemment par l'appareil, et à l'indication visuelle du fait que l'élève a répété de façon exacte ou inexacte la note ou la série de notes entendue – voir par exemple: brevet GB-A-1 465 470 – demande de brevet EP-A-0 015 040 – brevet US-A-4 012 979.

L'invention vise à enrichir considérablement les possibilités offertes par les appareils existants pour l'éducation musicale de l'oreille, en augmentant le nombre des moyens d'action de l'élève sur l'appareil ainsi que la variété des instructions pouvant être données par l'appareil à l'élève, de manière à obtenir un fonctionnement de type réellement «interactif», permettant le déroulement d'exercices nombreux et variés en suivant une véritable démarche pédagogique.

A cet effet, dans le dispositif proposé, comprenant un générateur de notes polyphonique en liaison avec un organe de commande central micro-programmé, comportant en mémoire au moins un programme pédagogique pré-établi, et relié par l'intermédiaire d'un module d'acquisition à un clavier de type piano ou similaire, ainsi qu'à un organe de visualisation, il est prévu selon l'invention que comprend en outre un ensemble de touches de fonctions à signification prédéterminée servant à l'élève pour donner les réponses à certains exercices musicaux programmés, et prévues pour une utilisation interactive du dispositif, ces touches de fonctions étant reliées au module d'acquisition auquel elles transmettent leurs informations, le module d'acquisition mettant en forme les informations reçues des touches de fonctions et les transmettant à l'organe de commande central.

Le dispositif pédagogique ainsi conçu permet de réaliser plusieurs exercices de base qui sont sélectionnés par l'élève, et aussi de nombreux exercices supplémentaires permis par l'adjonction de modules de mémoires amovibles pré-programmés. Pour chaque exercice, la signification des touches de fonctions peut être redéfini par un jeu de caches ou par des moyens équivalents de façon à multiplier les possibilités de réponses de la part de l'élève. Les principaux exercices peuvent se classer dans les catégories suivantes:

– exercices de reconnaissance d'intervalles de fréquence: ou bien le dispositif génère successivement deux notes quelconques et l'élève doit reconnaître, au moyen des touches de fonctions, l'intervalle de fréquence entre ces deux notes, ou bien, inversement, le dispositif génère une note de référence et demande à l'élève de frapper au clavier une deuxième note ayant avec la première un intervalle donné.

– exercices de reconnaissance de tonalité: le dispositif génère une séquence de notes dans un mode ou une tonalité, et l'élève doit reconnaître, au moyen d'autres touches de fonctions, de quel mode ou tonalité il s'agit.

– exercices de reconnaissance d'accords: ou bien le dispositif génère un accord de trois notes simultanées ou plus, et l'élève doit reconnaître, au moyen d'autres touches de fonctions de quel accord il s'agit, ou bien, inversement, le dispositif génère une note de référence et demande à l'élève de frapper au clavier un accord donné à partir de cette note.

– exercices de mémorisation de notes et/ou d'accord: le dispositif génère une séquence plus ou moins longue de notes et/ou d'accords que l'élève doit mémoriser puis répéter au clavier.

– exercices de transposition: ou bien le dispositif génère une séquence de notes dans une tonalité et l'élève doit répéter cette séquence au clavier en la transposant dans une tonalité donnée, ou bien, inversement, le dispositif génère successivement la même séquence de notes dans deux tonalités différentes et l'élève doit reconnaître l'intervalle de transposition.

– exercices de variation de diapason: le dispositif générant une note ou une séquence de notes, puis la même note ou séquence avec ou non un léger décalage fréquentiel, l'élève doit reconnaître s'il y a ou non variation du diapason entre les deux émissions.

– exercices de justesse: le dispositif génère une séquence de notes ou d'accords dont certaines notes comportent un léger décalage fréquentiel (compris par exemple entre $1/4$ et $1/50$ de ton) par rapport à la note de référence qui devrait être générée, et l'élève doit reconnaître quelles sont la ou les notes qui ont été générées avec le décalage fréquentiel, au moyen de touches de fonctions qui sont associées aux noms des différentes notes.

– exercices faisant appel à «l'oreille interne»: le dispositif affiche une suite de notes et il génère simultanément la suite de notes correspondante, juste ou comportant des erreurs, et l'élève doit reconnaître si le jeu est juste ou faux.

– exercices de reconnaissance de rythmes: le dispositif génère une séquence de notes ou d'accords rythmée, et l'élève doit reconnaître les cellules rythmiques, le type de mesure, la carrure rythmique ou différentes mesures asymétriques.

– exercices de mémorisation de rythmes: le dispositif génère un tempo ou une séquence de notes rythmée que l'élève doit répéter au clavier en respectant le rythme.

– exercices de reconnaissance de timbre: le dispositif génère une note ou suite de notes ou d'accords, chaque note pouvant être générée avec le timbre de différents instruments que l'élève doit reconnaître.

Suivant l'exercice l'élève peut répondre en utilisant soit le clavier du piano (par exemple répétition manuelle de la note automatiquement générée ou frappe d'un accord demandé), soit le clavier de touches de fonctions (par exemple: reconnaissance d'un intervalle, d'un accord ou d'un rythme).

Le dispositif analyse la réponse ainsi donnée par l'élève, et l'organe de visualisation, de préférence du type alphanumérique, lui indique la qualité de sa réponse et lui donne les directives à suivre au fur et à mesure du déroulement de l'exercice. La difficulté et/ou la progression de chaque exercice peuvent être ajustées automatiquement et en temps réel suivant un cheminement pédagogique pré-établi, en fonction de la rapidité et de la justesse des réponses antérieures de l'élève, l'ensemble du système fonctionnant ainsi suivant un mode interactif.

Suivant une forme de réalisation de l'invention, le dispositif comporte un générateur de variable aléatoire constituant une des entrées d'un générateur de notes isolées ou de séquences de notes à intervalles de fréquence, rythme et amplitude variables et d'un générateur d'accords ou de séquences d'accords à rythme et amplitude variables permettant, sous le contrôle de l'organe de commande central, une grande variété dans le déroulement des exercices proposés. Ces composants permettent de générer des suites de notes isolées à un rythme variable, ou de générer simultanément deux notes ou plus, etc., pour la réalisation des divers exercices dont le principe a été indiqué plus haut. L'utilisation de variables aléatoires, dans la génération des notes ou séquences de notes, permet une très grande diversité dans le déroulement des exercices proposés, et évite que les réponses à ces exercices soient données de mémoire.

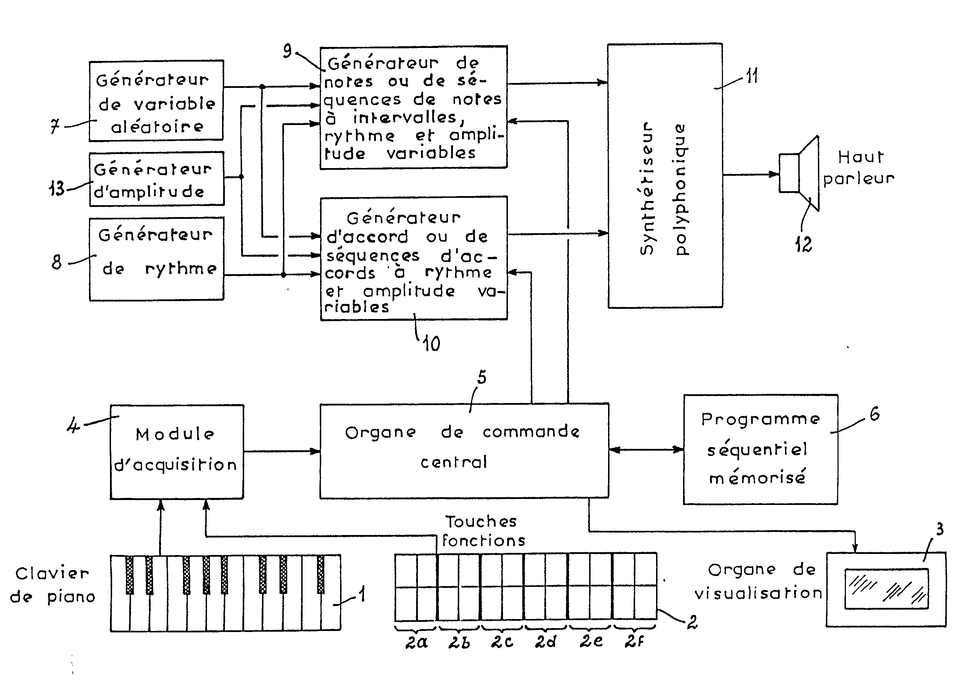

De toute façon, l'invention sera mieux comprise à l'aide de la description qui suit, en référence au dessin schématique annexé dont l'unique figure représente, sous la forme d'un schéma-bloc, un mode de réalisation particulier de ce dispositif pédagogique pour l'éducation musicale de l'oreille.

Ce dispositif comporte, comme organe d'entrée, un clavier de type piano (1) ou similaire, ainsi qu'un ensemble de touches (2) dites «touches de fonctions», ces organes étant disposés sur un pupitre qui comporte en outre un organe de visualisation (3) de type alphanumérique.

L'état de chacune des touches, qu'il s'agisse de celles du clavier de piano (1) ou des touches de fonctions (2), est analysé par un module d'acquisition (4), qui met en forme les informations reçues de ces diverses touches et les transmet à un organe de commande central (5). Le fonctionnement de l'organe de commande central (5) est régi par un programme séquentiel mémorisé en (6).

Sur la moitié supérieure du diagramme est représentée très schématiquement une forme d'exécution possible des moyens constituant un générateur de notes polyphonique. Un générateur de variable aléatoire (7), un générateur de rythme (8) et un générateur d'amplitude (13) sont reliés tous les trois, d'une part, à un générateur de notes isolées ou de séquences de notes à intervalles de fréquence, rythme et amplitude variables (9), et d'autre part à un générateur d'accords isolés ou de séquences d'accords à rythme et amplitude variable (10). Ces deux derniers générateurs (9) et (10) ont leurs sorties reliées à un synthétiseur polyphonique (11), qui produit les sons au moyen d'un haut-parleur (12).

L'organe de commande central (5) se trouve en relation avec l'organe de visualisation (3), avec le générateur de notes ou de séquences de notes (9) et avec le générateur d'accords ou séquences d'accords (10). Ainsi, en fonction de la séquence en cours du programme pédagogique préétabli, mémorisé en (6), et des informations provenant du clavier (1) et des touches fonctions (2) par l'intermédiaire du module (4), cet organe de commande central (5) gère le fonctionnement des générateurs de notes ou d'accords (9) et (10), ainsi que de l'organe de visualisation (3). Les générateurs de notes ou d'accords (9) et (10) utilisent les signaux produits par les générateurs de variable aléatoire (7) et de rythme (8), et transmettent au synthétiseur polyphonique (11) les informations nécessaires à la génération de sons, en vue de l'écoute des séquences de notes isolées ou simultanées choisies.

L'utilisation des touches de fonctions (2), et le rôle de l'organe de visualisation (3), seront mieux compris par la description qui suit des affectations possibles de ces touches et d'une séquence typique du déroulement d'un exercice.

Comme l'illustre schématiquement le dessin, l'ensemble des touches de fonctions (2) peut fonctionnellement se diviser en plusieurs sous-ensembles (2a) à (2f), regroupant chacun un certain nombre de touches, par exemple:

– un premier sous-ensemble (2a) de touches comportant la dénomination musicale de chaque note: Do, Ré, Mi, . ., etc, ou autre notation usuelle, selon les pays.

– un sous-ensemble de touches (2b) comportant la dénomination musicale des intervalles de fréquences sur une octave: seconde, tierce, quarte. . . etc.

– un sous-ensemble de touches (2c) comportant la dénomination musicale des accords des trois, quatre et cinq sons: accord parfait, accord de quinte, accord de sixte, etc. . .

– un sous-ensemble de touches (2d) comportant la dénomination musicale des principaux rythmes binaires, ternaires, irréguliers: deux croches, trois croches, quatre doubles, etc. . .

– un sous-ensemble de touches (2e) comportant la dénomination musicale des principales catégories de timbres d'instruments de musique: anche, perce, corde, etc. . .

– un dernier sous-ensemble de touches (2f) à signification plus générale, notamment à signification logique, pouvant être utilisées seules ou en complément avec des touches des autres sous- ensembles: «OUI», «NON», «plus haut», «majeur», «mineur», «juste», «augmenté», etc. . .

Toutes ces touches de fonctions (2a) à (2f), permettent ainsi la désignation des notions correspondantes, notamment pour indiquer leur reconnaissance par l'élève en tant que réponse à des exercices.

Un exercice étant supposé en cours, l'organe de visualisation (3) affiche: «ECOUTEZ». L'appareil génère alors, selon l'exercice, une suite de notes ou d'accords puis l'organe de visualisation (3) affiche «REPONDEZ». L'élève réfléchit à la réponse qu'il doit donner et il apuie sur la ou les touches fonctions (2) correspondant à la réponse qu'il croit être la bonne.

Si la réponse est exacte, l'organe de visualisation (3) indique «REPONSE EXACTE», et l'appareil enchaîne sur une autre question de difficulté égale ou supérieure à la précédente. Si la réponse est fausse, l'organe de visualisation (3) indique «REPONSE FAUSSE» et l'appareil répète la même question ou pose une question de difficulté inférieure.

Quand l'exercice est terminé, le résultat global obtenu par l'élève peut être affiché par l'organe de visualisation (2) par exemple sous une forme notée telle que «RESULTAT OBTENU: 18/20» ou sous la forme d'une appréciation générale: «TRES BIEN», «BIEN». . . L'élève peut alors choisir d'effectuer un autre exercice.

Comme il va de soi, l'invention ne se limite pas au seul mode de réalisation de ce dispositif pédagogique pour l'éducation musicale de l'oreille qui a été décrit ci-dessus, à titre d'exemple; elle en embrasse, au contraire, toutes les variantes conçues selon le même principe, quels qu'en soient les détails constructifs. C'est ainsi, notamment, que les moyens (7) à (13) constituant le générateur de notes polyphonique sont réalisables d'une manière différente de celle illustrée par le dessin, sans que l'on s'éloigne du cadre de l'invention.

## Revendications

1. Dispositif pédagogique pour l'éducation musicale de l'oreille, comprenant un générateur de notes polyphonique (7 à 13) en liaison avec un organe de commande central micro-programmé (5, 6), comportant en mémoire au moins un programme pédagogique pré-établi, et relié par l'intermédiaire d'un module d'acquisition (4) à un clavier de type piano (1) ou similaire, l'organe de commande central micro-programmé (5, 6) étant relié aussi à un organe de visualisation (3), caractérisé en ce qu'il comprend en outre un ensemble de touches de fonctions (2) à signification prédéterminée servant à l'élève pour donner les réponses à certains exercices musicaux programmés, et prévues pour une utilisation interactive du dispositif, ces touches de fonctions (2) étant reliées au module d'acquisition (4) auquel elles transmettent leurs informations, le module d'acquisition (4) mettant en forme les informations reçues des touches de fonctions (2) et les transmettant à l'organe de commande central.

2. Dispositif pédagogique pour l'éducation musicale de l'oreille selon la revendication 1, caractérisé en ce que des touches de fonctions (2a) sont prévues pour la désignation de chaque note.

3. Dispositif pédagogique pour l'éducation musicale de l'oreille selon la revendication 1, caractérisé en ce que des touches de fonctions (2b) sont prévues pour la désignation d'intervalles de fréquence.

4. Dispositif pédagogique pour l'éducation musicale de l'oreille selon la revendication 1, caractérisé en ce que des touches de fonctions (2c) sont prévues pour la désignation d'accords.

5. Dispositif pédagogique pour l'éducation musicale de l'oreille selon la revendication 1, caractérisé en ce que des touches de fonctions (2d) sont prévues pour la désignation de rythmes.

6. Dispositif pédagogique pour l'éducation musicale de l'oreille selon la revendication 1, caractérisé en ce que des touches de fonctions (2e) sont prévues pour la désignation de timbres d'instruments de musique.

7. Dispositif pédagogique pour l'éducation musicale de l'oreille selon la revendication 1, caractérisé en ce que sont prévues des touches de fonctions (2f) à signification générale, notamment logique.

8. Dispositif pédagogique pour l'éducation musicale de l'oreille selon l'une quelconque des revendications 1 à 7, caractérisé en ce qu'il comporte in générateur de variable aléatoire (7) constituant une des entrées d'un générateur de notes isolées ou de séquences de notes à intervalles de fréquence, rythme et amplitude variable (9) et une des entrées d'un générateur d'accords ou de séquences d'accords à rythme et amplitude variables (10), ce générateur de variable aléatoire (7) permettant, sous le contrôle de l'organe de commande central (5), une grande variété dans le déroulement de chaque exercice proposé.

9. Dispositif pédagogique pour l'éducation musicale de l'oreille selon l'une quelconque des revendications 1 à 8, caractérisé en ce que l'organe de visualisation (9) est du type alphanumérique et prévu pour indiquer à l'élève la qualité de sa réponse et pour lui donner les directives à suivre au fur et à mesure du déroulement des exercices.

## Patentansprüche

1. Lehrgerät zum Trainieren des musikalischen Gehörs mit einem Generator (7 bis 13) zur Erzeugung polyphoner Töne in Verbindung mit einem zentralen, mikroprogrammierten Steuerorgan (5, 6), in welchem wenigstens ein vorbestimmtes Lehrprogramm gespeichert ist und das über ein Erfassungsmodul (4) mit einem vorzugsweise klaviertastaturartigen Tastenfeld (1) verbunden ist und das (5, 6) ferner mit einem Organ (3) zur Visualisierung in Verbindung steht, gekennzeichnet durch einen Satz von Funktionstasten (2) mit vorbestimmter Bedeutung, die dem Schüler dazu dienen, gewisse programmierte musikalische Übungen zu beantworten, und die zur interaktiven Nutzung des Geräts vorgesehen sind, wobei diese Funktionstasten (2) mit dem Erfassungsmodul (4) verbunden sind, zu dem sie ihre Informationen übertragen, und wobei das Erfassungsmodul (4) die aufgenommenen Informationen der Funktionstasten (2) umformt und zu dem zentralen Steuerorgan überträgt.

2. Lehrgerät zum Trainieren des musikalischen Gehörs nach Anspruch 1, dadurch gekennzeichnet, dass Funktionstasten (2a) für die Bestimmung jedes Tons vorgesehen sind.

3. Lehrgerät zum Trainieren des musikalischen Gehörs nach Anspruch 1, dadurch gekennzeichnet, dass Funktionstasten (2b) für die Bestimmung von Frequenzintervallen vorgesehen sind.

4. Lehrgerät zum Trainieren des musikalischen Gehörs nach Anspruch 1, dadurch gekennzeichnet, dass Funktionstasten (2c) für die Bestimmung von Akkorden vorgesehen sind.

5. Lehrgerät zum Trainieren des musikalischen Gehörs nach Anspruch 1, dadurch gekennzeichnet, dass Funktionstasten (2d) für die Bestimmung von Rythmen vorgesehen sind.

6. Lehrgerät zum Trainieren des musikalischen Gehörs nach Anspruch 1, dadurch gekennzeichnet, dass Funktionstasten (2e) für die Bestimmung der Klangfarbe von Musikinstrumenten vorgesehen sind.

7. Lehrgerät zum Trainieren des musikalischen Gehörs nach Anspruch 1, dadurch gekennzeichnet, dass Funktionstasten (2f) mit allgemeiner, insbesondere logischer Bedeutung vorgesehen sind.

8. Lehrgerät zum Trainieren des musikalischen Gehörs nach einem der Ansprüche 1 bis 7, dadurch gekennzeichnet, dass ein Generator (7) zur Erzeugung aleatorischer Variabler vorgesehen ist, die

– eine der Eingangsgrössen eines Generators (9) zur Erzeugung einzelner Töne oder von Tonfolgen mit variabler Frequenz-, Rythmus- oder Amplitudenintervallen,

– und eine der Eingangsgrössen eines Generators (10) zur Erzeugung von Akkorden oder Akkordfolgen mit Rythmus oder variabler Frequenz bilden, wobei der Generator (7) zur Erzeugung aleatorischer Variabler unter dem Steuereinfluss des zentralen Steuerorgans (5) eine grosse Vielfalt im Ablauf jeder vorgeschlagenen Übung ermöglicht.

9. Lehrgerät zum Trainieren des musikalischen Gehörs nach einem der Ansprüche 1 bis 8, dadurch gekennzeichnet, dass das Organ (3) zur Visualisierung alphanumerisch ist und dazu dient, dem Schüler die Qualität seiner Antwort anzuzeigen und ihm Weisungen zu geben, die im Verlauf der Übungen und nach Massgabe von deren Ablauf zu befolgen sind.

## Claims

1. A teaching device for musical ear training comprising a polyphonic note generator (17 to 13) connected to a micro-programmed central control device (5, 6) comprising in a memory at least one pre-established teaching programme which is connected by means of an input module (4) to a piano or similar type of key board, the micro-programmed central control device (5, 6) being connected also to a visual display unit (3), characterised in that it comprises in addition a key assembly (2) having functions of predetermined meaning serving to provide for the pupil the responses to certain programmed musical exercises and provided for interactive use of the device, these function keys (2) being connected to the input module (4) to which transmit their information, the input module (4) putting the information received from the function keys (2) into form and transmitting them to the central control device.

2. A teaching device for musical ear training according to Claim 1, characterised in that the function keys (2a) are provided for the designation of each note.

3. A teaching device for musical ear training according to Claim 1, characterised in that function keys (2b) are provided for the designation of frequency intervals.

4. A teaching device for musical ear training according to Claim 1, characterised in that function keys (2c) are provided for the designation of chords.

5. A teaching device for musical ear training according to Claim 1, characterised in that function keys (2d) are provided for the designation of rhythms.

6. A teaching device for musical ear training according to Claim 1, characterised in that function keys (2e) are provided for the designation of the qualities of musical instruments.

7. A teaching device for musical ear training according to Claim 1, characterised in that function keys (2f) are provided having a general signification, notably a logical one.

8. A teaching device for musical ear training according to any one of Claims 1 to 7, characterised in that it includes a random variable generator 7 constituting one of the inputs of a generator 9 of single notes or sequences of notes having variable intervals of frequency, rhythm and amplitude and also constituting one of the inputs of a generator 10 of chords or sequences of chords having a variable rhythm and amplitude, this random variable generator 7 permitting a large variety in the development of each proposed exercise under the control of the central control device (5).

9. A teaching device for musical ear training according to any one of Claim 1 to 8 characterised in that the visual display unit (9) is of the alphanumerical type and provided to indicate to the pupil the quality of his response and to give him the rules to be followed during the course of the exercises.

1/1

Générateur de variable aléatoire — 7

Générateur d'amplitude — 13

Générateur de rythme — 8

9 — Générateur de notes ou de séquences de notes à intervalles, rythme et amplitude variables

Générateur d'accord ou de séquences d'accords à rythme et amplitude variables — 10

Synthétiseur polyphonique — 11

Haut parleur — 12

Module d'acquisition — 4

Organe de commande central — 5

Programme séquentiel mémorisé — 6

Clavier de piano — 1

Touches fonctions

2a 2b 2c 2d 2e 2f — 2

Organe de visualisation — 3